# EUROPEAN PATENT APPLICATION

(11) **EP 4 422 022 A1**
(43) Date of publication of application: **28.08.2024**
(21) Application number: 23197025.2
(22) Date of filing: 12.09.2023
(51) Int. Cl.: H02J 7/00, H02M 3/157

(54) **SYSTEMS, DEVICES, AND METHODS FOR ADAPTIVE CHARGING OF A BATTERY FOR A CORDLESS APPLIANCE**

(30) Priority: 27.02.2023 US 202318114737
(71) Applicant: SharkNinja Operating LLC, Needham, MA 02494 (US)
(72) Inventor: Howard, Damian, Needham, MA, 02494 (US)
(74) Representative: Harris, Oliver John Richard

(57) **Abstract**

An adaptive charge controller for a cordless appliance including an input interface arranged to receive an input electrical power signal and an output interface arranged to output a boosted electrical power signal to a battery. The controller also includes a processor arranged to: monitor an input voltage of the input power signal, monitor an output voltage and an output current of the boosted electrical power signal and adjust a pulse width modulated (PWM) signal based on the input voltage, the output voltage, and the output current. The controller further includes an electronic switch arranged to receive the PWM signal from the processor and adjust the boosted electrical power signal in response to the received PWM signal.

## Description

### FIELD OF THE INVENTION

The present disclosure relates to cordless appliances and, more particularly, to controlling electronic charging of a battery of a cordless appliance.

### BACKGROUND

Cordless consumer appliances include devices such as handheld vacuum cleaners, portable blenders, food processors, electronic wine openers, can openers, electric knives, and coffee grinders. Portable and rechargeable blenders are known and available to consumers. Such portable blenders typically have a base assembly, a container assembly, and control circuitry. The base assembly typically includes a rechargeable battery configured to power an electrical motor during blending by the blender. The base assembly often includes an electronic charging port that receives power from a standards-based charging cable which may include a Universal Serial Bus (USB) charging interface.

Unfortunately, existing standards-based charging interfaces, such as USB interfaces, are limited to enabling charging at rates that are not optimized based on the requirements or existing conditions of the battery or environment associated with a particular re-chargeable cordless appliance. Accordingly, there is a need for more efficient, rapid, and adaptive charging of cordless rechargeable appliances.

### SUMMARY

This disclosure describes systems, devices, and methods that address the need for more efficient, rapid, and adaptive charging of cordless appliances such as portable food processing devices or other types of cordless re-chargeable electronic appliances or devices.

In one aspect, an adaptive charge controller for a cordless appliance includes an input interface arranged to receive an input electrical power signal and an output interface arranged to output a boosted electrical power signal to a battery. The adaptive charge controller also includes a processor arranged to: monitor an input voltage of the input power signal; monitor an output voltage and an output current of the boosted electrical power signal; and adjust a pulse width modulated (PWM) signal based on the input voltage, the output voltage, and the output current. The adaptive charge controller further includes an electronic switch arranged to receive the PWM signal from the processor and adjust the boosted electrical power signal in response to the received PWM signal.

In some implementations, the electronic switch includes a transistor. The transistor may be a MOSFET. The PWM signal may include a PWM frequency and a PWM duty cycle. The battery may include a plurality of battery cells. The adaptive charge controller may include or interface with a memory having a lookup table. The processor may be arranged to adjust the PWM signal based on comparing the monitored input voltage, output voltage, and output current with input voltage, output voltage, and output current settings in the lookup table.

The processor may be further arranged to control other operations of the cordless appliance including operations of a motor. In some implementations, the input interface receives the input electrical power signal from an electrical charger and/or adapter. The electrical charger may be a standards-based charger. The electrical charger may include a USB 2.0, USB 3.0, USB 3.1, USB BC 1.2, USB Type C 1.2, and/or USB PD 3.0 charger.

In another aspect, a method for adaptively charging a battery of a cordless appliance includes: connecting an electrical charger to an input interface of a charge controller; receiving an input electrical power signal from the electrical charger; monitoring an input voltage of the input electrical power signal; monitoring an output voltage and an output current of a boosted electrical power signal output from the charge controller; adjusting , by a processor, a PWM signal based on the input voltage, output voltage, and output current; receiving the PWM signal at an electronic switch; and adjusting, by the electronic switch, the boosted electrical power signal in response to the received PWM signal.

In a further aspect, a cordless appliance includes a housing arranged to house a motor, battery, a user interface, and an adaptive charge controller. The adaptive charge controller includes an input interface arranged to receive an input electrical power signal and an output interface arranged to output a boosted electrical power signal to a battery. The adaptive charge controller also includes a processor arranged to: monitor an input voltage of the input power signal; monitor an output voltage and an output current of the boosted electrical power signal; and adjust a PWM signal based on the input voltage, the output voltage, and the output current. The adaptive charge controller further includes an electronic switch arranged to receive the PWM signal from the processor and adjust the boosted electrical power signal in response to the received PWM signal.

A reading of the following detailed description and a review of the associated drawings will make apparent the advantages of these and other structures. Both the foregoing general description and the following detailed description serve as an explanation only and do not restrict aspects of the disclosure as claimed.

### BRIEF DESCRIPTION OF THE DRAWINGS

Reference to the detailed description, combined with the following figures, will make the disclosure more fully understood, wherein:
FIGS. 1A and 1B show front and back views respectively of an exemplary cordless appliance including a charging interface port;
FIG. 2 is a block diagram of a cordless appliance including an adaptive charge controller;
FIG. 3 is a schematic diagram of an adaptive charge control circuit;
FIG.4A is a lookup table accessible by a charge controller to adjust a boosted electrical power signal;
FIG. 4B is a PWM duty cycle lookup table with charger power range greater than or equal to 10W;
FIG. 4C is a PWM duty cycle lookup table with charger power range greater than or equal to 7.5W to less than 10W;
FIG. 4D is a PWM duty cycle lookup table with charger power range greater than or equal to 5W to less than 7.5W;
FIG. 4E is a PWM duty cycle lookup table with charger power range greater than or equal to 2.5W and to less than 5W;
FIG. 5 is a flow diagram of a process for adaptively charging a battery of a cordless appliance; and
FIGs. 6A through 6G show various views of a container used with of the cordless appliance of FIGs. 1A and 1B.

### DETAILED DESCRIPTION

In the following description, like components have the same reference numerals, regardless of different illustrated implementations. To illustrate implementations clearly and concisely, the drawings may not necessarily reflect appropriate scale and may have certain structures shown in somewhat schematic form. The disclosure may describe and/or illustrate structures in one implementation, and in the same way or in a similar way in one or more other implementations, and/or combined with or instead of the structures of the other implementations.

In the specification and claims, for the purposes of describing and defining the invention, the terms "about" and "substantially" represent the inherent degree of uncertainty attributed to any quantitative comparison, value, measurement, or other representation. The terms "about" and "substantially" moreover represent the degree by which a quantitative representation may vary from a stated reference without resulting in a change in the basic function of the subject matter at issue. Open-ended terms, such as "comprise," "include," and/or plural forms of each, include the listed parts and can include additional parts not listed, while terms such as "and/or" include one or more of the listed parts and combinations of the listed parts. Use of the terms "top," "bottom," "above," "below" and the like helps only in the clear description of the disclosure and does not limit the structure, positioning and/or operation of a cordless appliance in any manner.

This disclosure describes systems, devices, and methods that address the need for more efficient, rapid, and adaptive charging of cordless appliances such as portable food processing devices or other types of cordless re-chargeable electronic devices.

With the growing adoption of USB chargers used to charge a variety of products, a complicated landscape of USB chargers has evolved. Recently introduced USB Type-C^{™} and Power Delivery (PD) technologies have revolutionized cable connectivity with the ability to carry all manner of data, as well as negotiate and supply up to 100W power to charge connected equipment. Less cables, less connectors and more universal chargers are just some of the principal benefits. Indeed, USB Type-C^{™} cables and connectors support up to 15W (5V at 3A), which rises to 100W (up to 20V at 5A) with the USB Power Delivery feature.

However, even though a new generation of USB Type-C^{™} adapters are available, the vast adoption of previous versions of USB chargers still exist both in the market place as well as in consumer homes. These typically incorporate a USB-A type connector to which a cable can be connected. There are also many USB-A to USB-C cables available and they continue to be shipped with cordless appliances and/or products.

Consumers (users) therefore have an expectation that any charger that physically can connect to their product, should be able to charge their product. This presents a unique challenge to small cordless appliances such as cordless blenders and handheld vacuums. These small cordless appliances typically use a USB-C connector to help "charge" their internal lithium battery. Many of these products contain at least two Li-ON cells in series which requires a charging voltage up to 8.4 volts to adequately charge the batteries. With external USB-A to USB-C cables, the products should therefore be able to connect and charge from any legacy USB-A charger in addition to USB-C chargers. An example of a hybrid connector is a charger having both a legacy USB-A and USB-C connector to which a compatible cable could be connected. As shown in Table 1 below, i.e., the product table of chargers, it can also be seen that the "output" capability of the charger is different depending on which connector you connect to the charger (5V/3A vs 5V/2.4A). Furthermore, Table 1 describes how the maximum power of legacy chargers has developed over USB specifications.

**Table 1 USB specification and maximum voltage, current and power**

| Specification | Max Voltage | Max Current | Max Power |
|---|---|---|---|
| USB 2.0 | 5 V | 500 mA | 2.5 W |
| USB 3.0 and 3.1 | 5 V | 900 mA | 4.5 W |
| USB BC 1.2 | 5 V | 1.5 A | 7.5 W |
| USB Type-C 1.2 | 5 V | 3 A | 15 W |
| USB PD 3.0 | 20 V | 5 A | 100 W |

There are four main categories of USB chargers that can be supported to minimize consumer dissatisfaction should a charger not be able to provide enough output to charge their appliance and/or product. It is therefore beneficial to be able to charge a cordless appliance and/or product such as a two-battery cell cordless blender with all chargers independent of their maximum output power. Table 1 shows that all new USB Type-C^{™} chargers provide up to 3A at 5V, 15W maximum ensuring that there is a top limit of input current at 5V. A USB Type-C^{™} power adapter, e.g., the power source 214 or 310, is required to have at least a 5V output. Table 1 shows that there are legacy USB 2.0 chargers that only have 5V output and that are output limited to 500mA at 5V, indicating a bottom limit of input current at 5V.

In some implementations, a fixed frequency or fixed PWM duty cycle DC-DC boost convertor and/or charge controller is used that is capable of charging cordless appliances and/or products that have one or two or more internal Li-ON battery cells and may be compatible across some legacy USB chargers and some new USB Type-C^{™} chargers. In various implementations, this disclosure incorporates the use of a microcontroller that varies the output PWM frequency and duty cycle that is applied to the electronic switch, e.g., a "MOSFET switch," of a DC-DC boost convertor circuit. The microcontroller, e.g., processor 206 or processor 216, may incorporate an intelligent program and/or algorithm while monitoring inputs such as an input voltage, an output charge current, and an output charge voltage to ensure the best charging possible over the range of USB chargers that exist in the marketplace. AKA "adaptive charge controller".

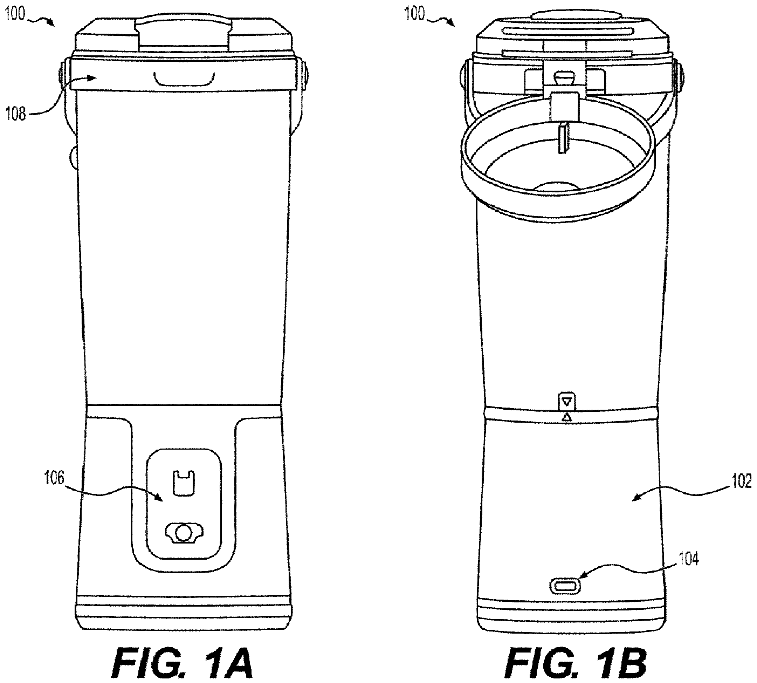

FIGS. 1A and 1B show front and back views respectively of an exemplary portable and rechargeable blender 100, i.e. a type of cordless appliance, including a charging interface port 104. Blender 100 includes a base housing 102 that may house a motor 220, battery 208, a user interface 106 and/or 222, and an adaptive charge controller 204, processor 216, memory 218, and other components 224. Blender 100 may include a container 108 configured to receive and process food items using a blade assembly. The blade assembly (not shown), which may be located in a lower portion of container 108, may be operatively coupled to motor 220 via a drive shaft and a blade assembly coupler interface between the container 108 and base housing 102.

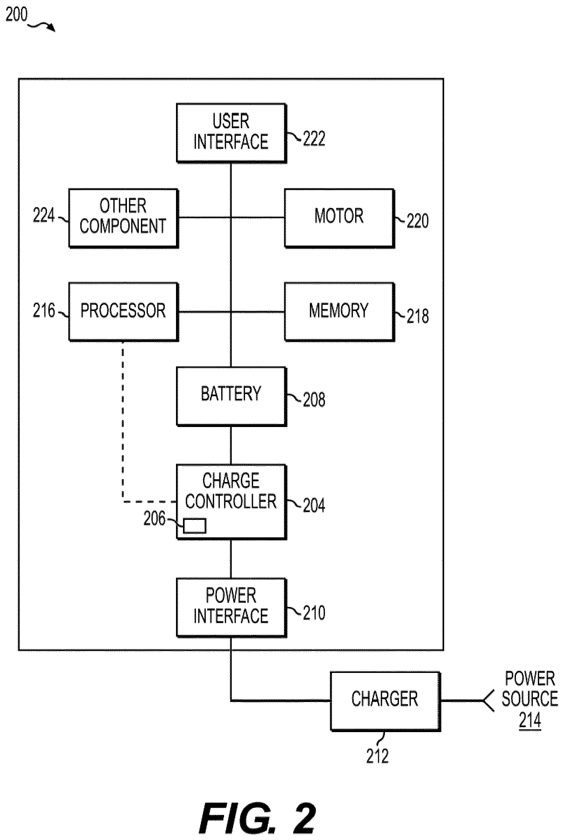

FIG. 2 is a block diagram 200 of the housing 102 including electronic components of cordless appliance 100 including the adaptive charge controller 204. The adaptive charge controller 204 may include a processor 206 that is arranged to control the charging rate applied to battery 208 by adjusting a PWM signal applied to electronic switch 302 that, in turn, adjusts an output electrical power signal from the charge controller 204 to optimize charging of the battery 208. The output electrical power signal from the charge controller 204 may be referred to as a modified electrical power signal and/or a boosted electrical power signal because, in various implementations, the charge controller 204 is arranged to boost an input electrical power signal from charger 212 and/or 310, e.g., a USB charger. The charger 212 may receive electrical power from a voltage source 214 such as an alternating current (AC) outlet.

Processor 216 may control various operations of blender 100 such as, without limitation, operation of motor 220 or other components 224. For example, processor 216 may control the speed, duration, start time, stop time of motor 220 to control the timing and/or duration of blending food items using blade assembly 110 within container 108. Processor 216 may, in some implementations, perform the functions of processor 206 with respect to controlling the output electrical power signal applied to battery 208. Hence, in some implementations, only a single processor 216 performs operations of the blender 100 including operations of charge controller 204.

User interface 222 may have, for example, a keyboard, keypad, touchpad, or sensor readout (e.g., biometric scanner) and one or more output devices, such as displays, speakers for audio, LED indicators, and/or light indicators. Power interface 210 may include a communications interface, such as a network communication unit that could include a wired communication component and/or a wireless communications component, which may be communicatively coupled to processor 206 and/or 216. The network communication unit may utilize any of a variety of proprietary or standardized network protocols, such as Ethernet, TCP/IP, to name a few of many protocols, to effect communications between processor 206 and/or 216 and another device, network, or system. Network communication units may also comprise one or more transceivers that utilize the Ethernet, power line communication (PLC), Wi-Fi, cellular, and/or other communication methods.

Processor 206 and/or 216 may contain one or more hardware processors, where each hardware processor may have a single or multiple processor cores. In one implementation, the processor 206 and/or 216 includes at least one shared cache that stores data (e.g., computing instructions) that are utilized by one or more other components of processor 206 and/or 216. For example, the shared cache may be a locally cached data stored in a memory, such as memory 218, for faster access by components of the processing elements that make up processor 206 and/or 216. Examples of processors include, but are not limited to, a central processing unit (CPU) and/or microprocessor. Processor 206 and/or 216 may utilize a computer architecture base on, without limitation, the Intel^{®} 8051 architecture, Motorola^{®} 68HCX, Intel^{®} 80X86, and the like. The processor 206 and/or 216 may include, without limitation, an 8-bit, 12-bit, 16-bit, 32-bit, or 64-bit architecture. Processor 206 and/or 216 may include, for example, microcontroller CMS80F2539 produced by Cmsemicon. Although not illustrated in FIG. 2, the processing elements that make up processor 206 and/or 216 may also include one or more other types of hardware processing components, such as graphics processing units (GPUs), application specific integrated circuits (ASICs), field-programmable gate arrays (FPGAs), and/or digital signal processors (DSPs).

Memory 218 may be operatively and communicatively coupled to processor 206 and/or 216. Memory 218 may be a non-transitory medium configured to store various types of data. For example, memory 218 may include one or more storage devices that include a non-volatile storage device and/or volatile memory. Volatile memory, such as random-access memory (RAM), can be any suitable non-permanent storage device. The non-volatile storage devices may include one or more disk drives, optical drives, solid-state drives (SSDs), tape drives, flash memory, read-only memory (ROM), and/or any other type of memory designed to maintain data for a duration time after a power loss or shut down operation. In certain configurations, the non-volatile storage devices may be used to store overflow data if allocated RAM is not large enough to hold all working data. The non-volatile storage devices may also be used to store programs that are loaded into the RAM when such programs are selected for execution. The programs may implement one or more algorithms used by processor 206 and/or 216 to enable adaptive control of charging by charge controller 204. Memory 218 may store one or more databases and/or lookup tables such as, for example, lookup table 400.

Processor 206 and/or 216 may be configured to execute stored instructions or process steps in memory 218 and/or an internal memory to perform instructions or process steps to transform the charge controller 204 into a non-generic, particular, specially programmed machine or apparatus. Stored data, e.g., data stored by a storage device and/or memory 218, may be accessed by processor 206 and/or 216 during the execution of computer executable instructions or process steps to instruct one or more components within cordless appliance 100.

User interface 222 may include a display, positional input device (such as a mouse, touchpad, touchscreen, or the like), keyboard, keypad, one or more buttons, or other forms of user input and output devices. The user interface components may be communicatively coupled to processor 216. When the user interface output device is or includes a display, the display can be implemented in various ways, including by a liquid crystal display (LCD) or light emitting diode (LED) display.

Existing DC-DC boost convertors use a fixed PWM frequency and duty cycle that is output from a clocking device such as a 555 timer integrated circuit (IC). The output of the 555 timer IC is applied to an electronic switch, e.g., a MOSFET, that connects an inductor to ground. Upon turning off the switch, the inductor voltage (VL) = dI/dT causes a higher voltage than the input voltage to flow through a diode and to charge an output capacitor. In this manner, a higher voltage can be developed across the output capacitor than the input voltage, resulting in a boosted output voltage.

Due to the fixed PWM frequency and duty cycle of the 555 timer IC output, the charging current and charging voltage (minimal 8.4V for a 2-cell LiON cordless product) determine the minimal input power (Vin, Iin) required for the charging circuit to work satisfactorily. For example, to achieve the quickest charge time, an output current of 1A at 8.4V may be desired. Given the typical circuit efficiency of 70%, this results in needing a minimal 12W. As can be seen from Table 1 above, this means that the design would not be compatible with USB2.0, USB3.0, USB3.1, USB BC1.2 and possibly some USB Type-C 1.2 chargers.

Alternatively, the charging current could be set lower to be 200mA at 8.4V minimal. At 70% efficiency, the circuit would require 480mA at 5V input and would be suitable across all chargers. However, the charge time for a typical Li-ON cordless product and/or appliance would be sacrificed and would increase dramatically resulting in a non-pleasurable experience for the consumer. Contrasting simply a charging current of 1A versus 200mA results in charge time that is 5 times longer.

It is also to be noted that when more power is drawn from a charger than its maximum output power (i.e., loaded too much), the result is that the charger output turns off. For example, connecting a 1ohm load to a 5V charger rated for 2.5W will result in no output from the charger as the inferred power draw with the 1ohm load is 5W which exceeds the power rating of the charger. Hence, the charger self-protects and turns off its output.

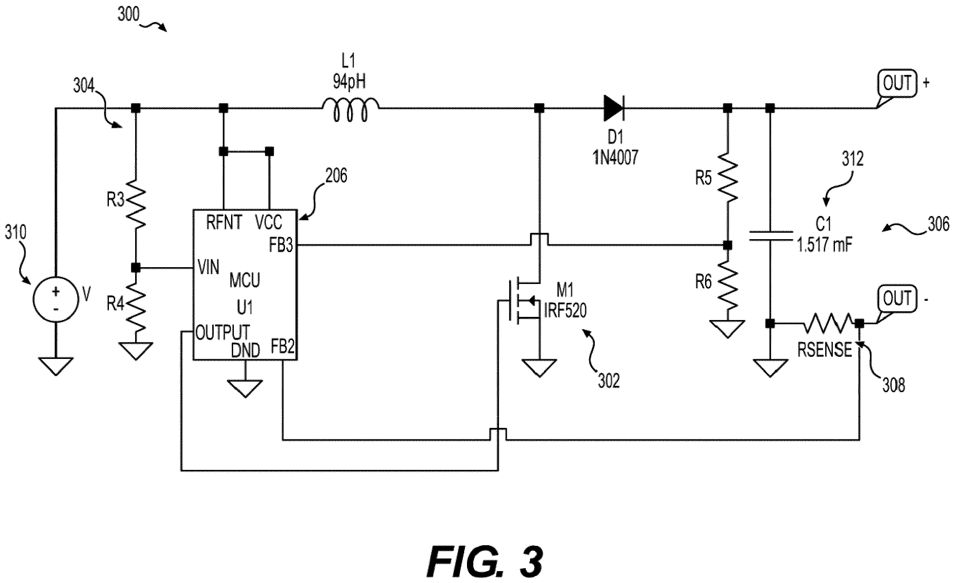

This disclosure describes implementation having technical improvements including an adaptive charge controller 204 which varies both the PWM frequency and duty cycle of the PWM signal that is applied to the electronic switch 302 (M1 of FIG. 3), which may include a MOSFET. By doing so, the circuit 300 efficiency can also be optimized beyond what is possible with the existing circuits. This results in more charge current with less input power required. Additionally, the PWM frequency and duty cycle, i.e., PWM signal, can be varied so as to minimize the required input power to match the connected charger 212 so as to provide the most suitable charging current to, for example, battery 208 that the connected charger 212 can support. In this manner, the implementations described herein can ensure that all chargers shown in Table 1 will charge the connected cordless appliance, e.g., consumer appliance 100, at the most effective charge current. Hence, the implementations disclosed herein solve at least one technical problem with respect to existing charging systems, namely how to more efficiently and adaptively optimize battery charging of a cordless appliance that may be connectable to different types of standards-based chargers with different charging capabilities.

FIG. 3 is a schematic diagram of an adaptive charge control circuit 300 of adaptive charge controller 204. Adaptive charge controller 204 and/or charge control circuit 300 may include an input interface 304 and an output interface 306. The input interface 304 may receive an input electrical power signal from voltage source 310 and/or charger 212. Input interface 304 may include a voltage splitter (shown as R3 and R4 in FIG. 3) that provides a voltage VIN monitored by processor 206 (shown a UI in FIG. 3). Adaptive charge control circuit 300 may also include an electronic switch 302 (shown as M1 in FIG. 3), which may be a MOSFET. Circuit 300 may include an output capacitor 312 (shown as C1 in FIG. 3) and a current sensing resistor 308 (shown as Rsense in FIG. 3). Circuit 300 may include additional elements to provide appropriate biasing of electronic switch and/or transistor 302.

In some implementations, to ensure that a 5V output is selected from any new USB Type -C^{™} Power Delivery charger, e.g., charger 212, the CC1 and CC2 pins on the product side USB connector, e.g., charge controller interface port 104, are connected to the ground pin of the USB-C connector via 5.1K +/-10% resistors as defined in the USB specifications in order to enable power capability detection and to ensure that the charger 212 outputs only 5V.

In various implementation, processor 206 (U1 of FIG. 3) controls the on-off duration of the output and/or boosted electrical power signal from adaptive charge controller 204 based upon a determination of which type of adapter and/or charger 212 is being used by the consumer. Table 1 indicates that there are at least 4 categories of chargers 212 that have varying output power maximums.

Processor 206 and/or 216 determines the type of adapter and/or charger 212 by monitoring three signals that existing implementation do not. First, the input voltage is monitored, such as at port VIN of processor 206. This corresponds to the output voltage of the connected charger 212. Second, the output voltage of the boost circuit, i.e., the voltage of the output capacitor 312 (C1 of FIG. 3), voltage at battery 208, and/or voltage at output interface 306, is monitored, such as via port FB1 of processor 206. The output voltage may be monitored and/or determined by processor 206 via port FB3 by detecting the voltage between resistors R5 and R6 of circuit 300. Third, the output current is monitored, via port FB2 of processor 206, using current sensing resistor 308 in the output charge path of capacitor 312 and/or battery 208, which develops a voltage across resistor 308 that is proportional to the current flowing through resistor 308. Processor 206 can interpret this "Rsense" voltage as current through the use of a look-up table (V=IR) which may be stored in memory 208. Each of these signals can be monitored by processor 206 by using analog-to-digital converter (ADC) ports of the processor 206. In some implementations, processor 216 may perform the functions described with respect to processor 206.

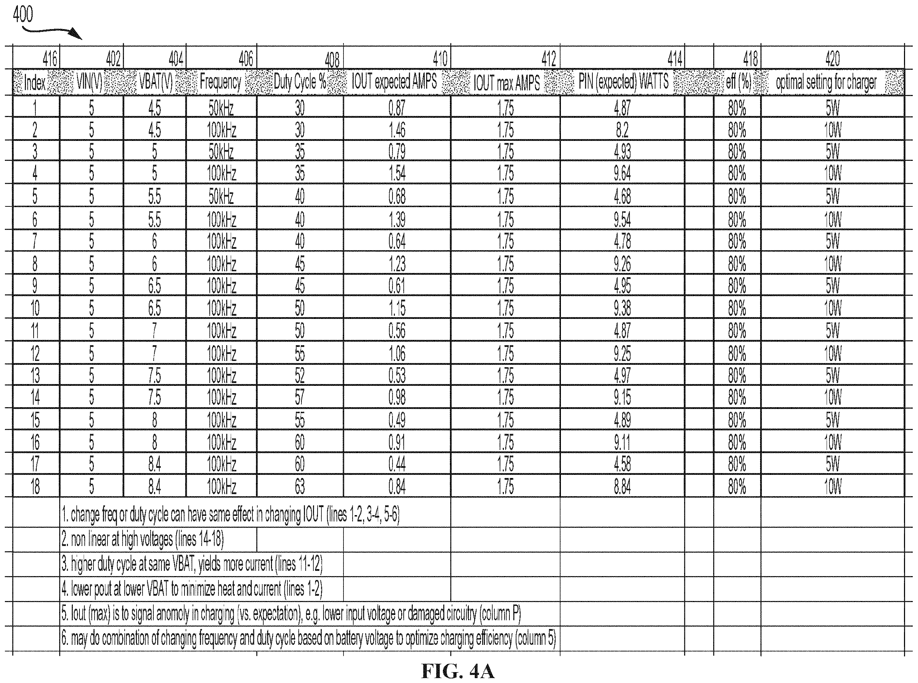

FIG.4A is a lookup table 400 accessed by adaptive charge controller 204 to adjust a boosted electrical power signal applied to battery 208. Table 400 includes Index rows 416 and column 402 for input voltage (VIN), column 404 for output voltage (VBAT or Vout), column 406 for PWM frequency, column 408 for PWM duty cycle %, column 410 for Iout expected, column 412 for Iout maximum, column 414 for Power in (PIN) expected, column 418 for efficiency and column 420 for the category of charger. In various implementations, the PWM frequency and duty cycle, i.e., the PWM signal, is determined by processor 206 through a combination of algorithms and look-up values, for example, in memory 218, based upon a characterization of the circuit 300 and connected battery cells of battery 208. An example process is described as follows:
1. Charger 212 is connected to blender 100 and an input voltage to adaptive charge controller 204 (VIN) is detected by processor 206 (U1 of FIG.3).
2. VIN is confirmed to be 5V by processor 206 (U1 of FIG. 3).
3. The starting voltage of the battery is determined with PWM duty cycle set to 0% (no boost voltage created). Output voltage from adaptive charge controller 204 (Vout) which is the voltage of output capacitor 312 (C1 of FIG. 3), which is connected to battery cells (e.g., battery 208) is measured, PWM rate and frequency is determined from look-up table 400, using the highest index number for a voltage Vout range (e.g. for Vout measured at 7V, index row 12 would be selected.
4. Processor 206 output (e.g., PWM signal) is turned on and/or adjusted based on the determination in step 3. When turned on, the Output voltage (Vout) which is connected to battery cells (e.g. battery 208) will rise over time as the current flows into the battery (the battery is being charged).
5. Processor 206 determines if Iout (Rsense current) matches expectation for current in lookup table 400 for given PWM rate and frequency, i.e., PWM signal.
6. Processor 206 determines if VIN is still present (i.e., 5V is detected at the VIN port of processor 206) or whether output has self-protected, i.e., the charger 212 has shut down.
7. If the output current from the adaptive charge controller 204 (Iout) matches, and VIN is still present as monitored by processor 206, then values for PWM rate and frequency of the previous index row are used from look-up table 400 (e.g. index row 11).
8. Steps 3, 4, 5, 6 are repeated as the battery voltage continues to rise over time. If Processor 206 output (e.g., PWM signal) is already turned on, then there is no need to turn it off before measuring the Output voltage from adaptive charge controller 204 (Vout).
9. If Iout does not match or VIN is absent, then the previous value for PWM rate and frequency are used from look-up table 400.
10. If Iout is measured to be in excess of the Iout maximum 412, then the Processor 206 output may be turned off (duty cycle 0%) as either the circuit may have failed or there been a battery cell failure. In this instance, a message may be displayed on User interface 222 to note servicing may be necessary or to warn of circuit failure.

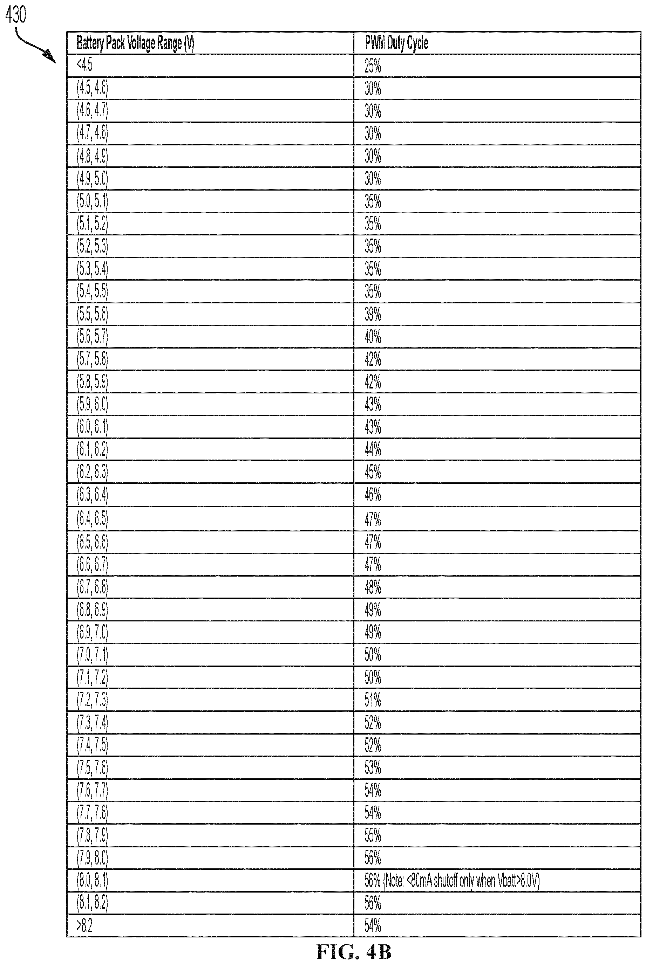

In various implementations, this is a cyclical monitoring and adjustment process and/or algorithm. It is ended when either the battery 208 is determined to be fully charged or the charger 212 has been removed/unplugged. Table 400 only shows two categories of chargers 5W and 10W but the table can be expanded to have multiple of categories. In addition, the number of index rows can be increased to have greater resolution to Vout. The look up table 400 row quantity is only limited by available memory 218. Table 400 may include PWM duty cycle lookup tables associated with various power ranges as illustrated in FIGs. 4B-4E.

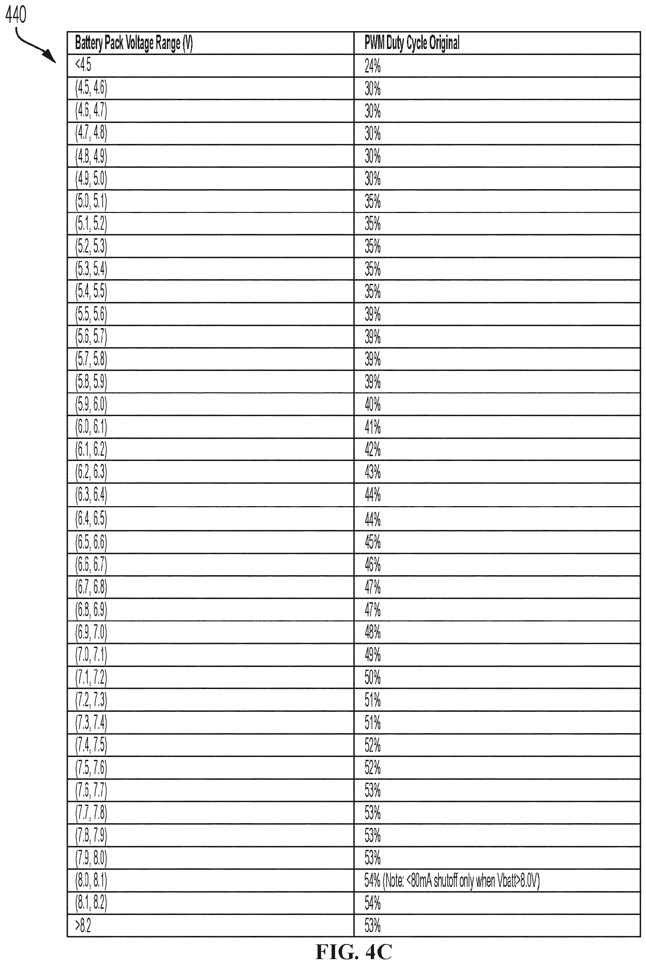

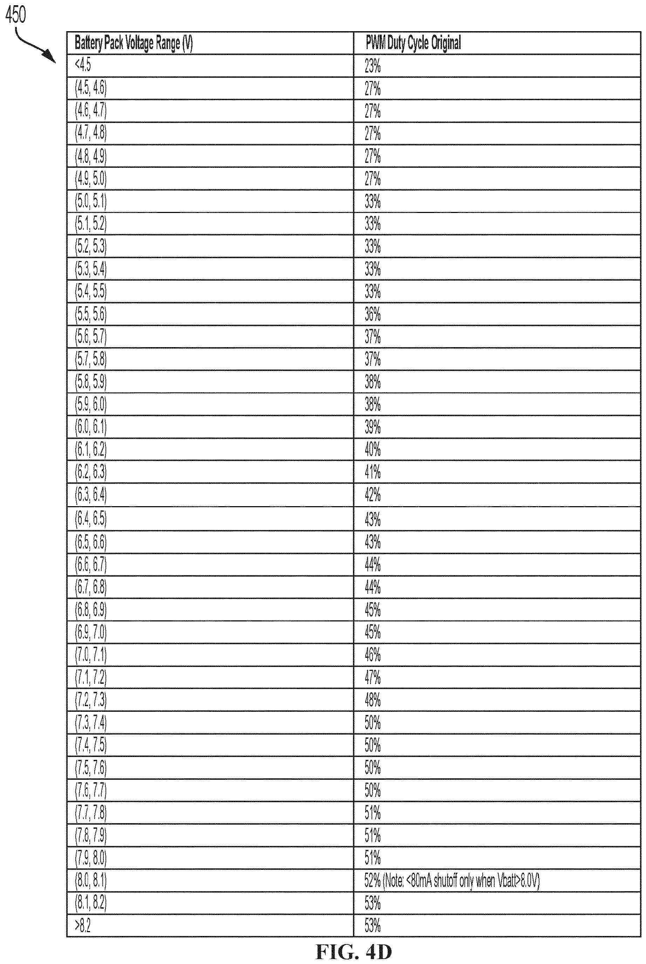

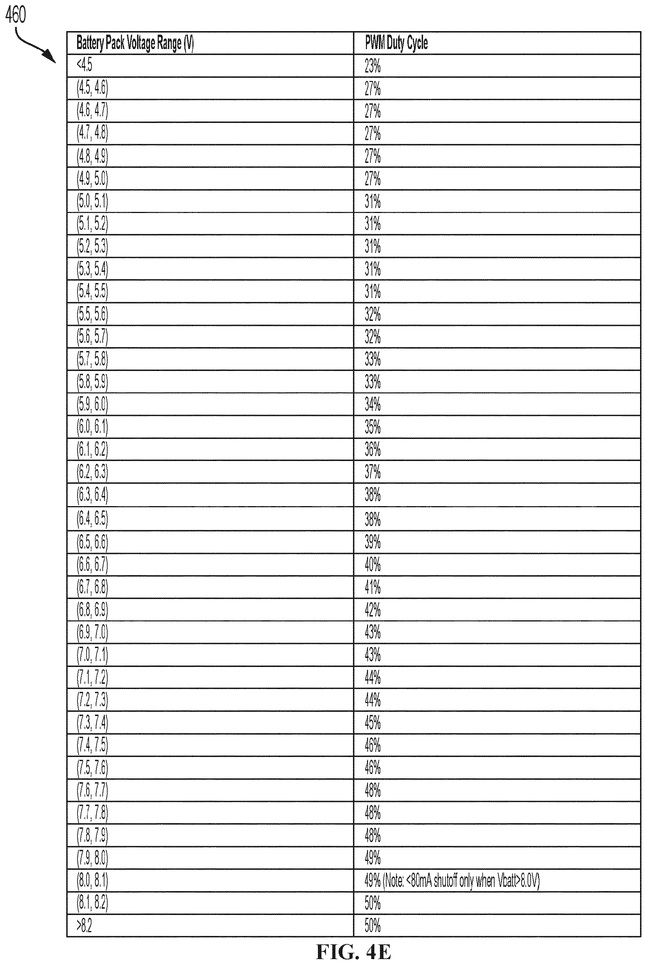

FIG. 4B is a PWM duty cycle lookup table 430 with charger power range greater than or equal to 10W. FIG. 4C is a PWM duty cycle lookup table 440 with charger power range greater than or equal to 7.5W to less than 10W. FIG. 4D is a PWM duty cycle lookup table 450 with charger power range greater than or equal to 5W to less than 7.5W. FIG. 4E is a PWM duty cycle lookup table 460 with charger power range greater than or equal to 2.5W and to less than 5W

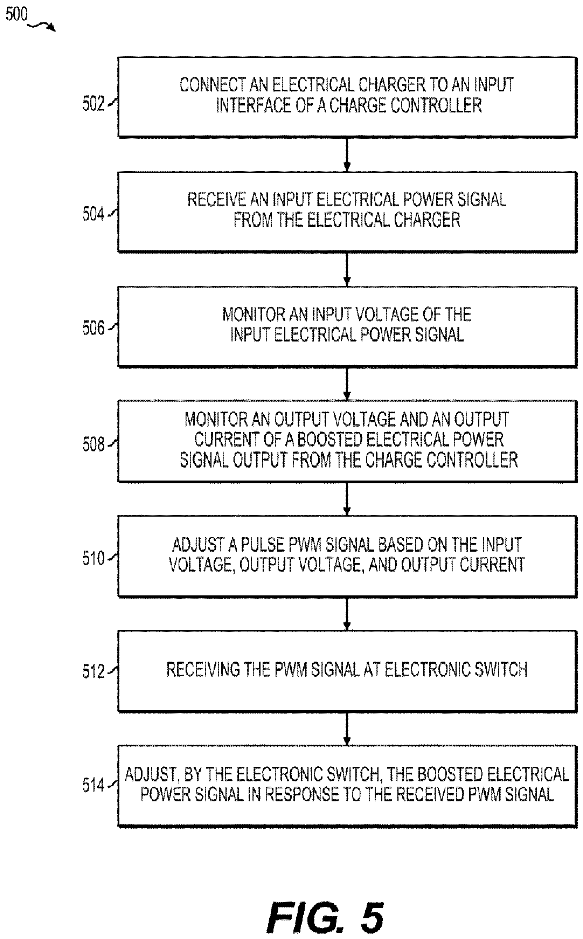

FIG. 5 is a flow diagram of a process 500 for adaptively charging a battery 208 of a cordless appliance such as cordless appliance 100. Process 500 includes the following: connecting an electrical charger 212 to an input interface 304 of a charge controller 204 (Step 502); receiving an input electrical power signal from the electrical charger 212 (Step 504); monitoring an input voltage of the input electrical power signal by processor 206 (Step 506); monitoring, by processor 206, an output voltage and an output current of a boosted electrical power signal output from the charge controller 204 (Step 508); adjusting , by processor 206, a pulse PWM signal based on the input voltage, output voltage, and output current (Step 510); receiving the PWM signal at electronic switch 302 (Step 512); and adjusting, by electronic switch 302, the boosted electrical power signal in response to the received PWM signal (Step 514).

Look up table 400 may include rows that change both PWM frequency 406 and PWM duty cycle % 408 so as to optimize DC-DC conversion efficiency 418 at different battery voltages (Vout). In index rows 1 and 2 of look up table 400, different PWM frequencies are chosen for when the battery voltage (Vout) is 4.5V as a lower PWM duty cycle % creates more heat in L1 of adaptive control circuit 300. Therefore, instead of decreasing the PWM duty cycle less than 30%, it may be advantageous to decrease the PWM frequency instead to 50KHz. The look up table 400 therefore gives flexibility and ability to determine the highest efficiency for the adaptive control circuit 300 across the full range of battery voltage Vout (in table 400 shown as 4.5V to 8.4V).

Index rows 11, 12 of Look up table 400 illustrate that higher PWM duty cycle % 408 yield higher Iout expected current 410. By selecting index row 12 instead of 11, a higher charging current is provided to the battery, resulting in faster charging time of the battery.

Index rows 14-18 of Look up table 400 illustrate that PWM duty clcyle % increases are non-linear to increases in battery voltage Vout. The use of a look-up table is therefore beneficial as it allows optimal adjustment of PWM duty cycle % to achieve faster charging times based on measured battery voltage Vout.

Index rows 1-2, 3-4, 5-6 illustrate that changing PWM frequency whilst holding the same PWM duty cycle % can have the same effect in changing Iout as changing PWM duty cycle % whilst holding the same PWM duty cycle %. Changing both PWM duty cycle % as well as PWM frequency in the same index row further illustrates the advantage of a Look up table 400 to define countless rows of combinations that achieve the highest charging efficiency across all categories of chargers and charging voltage Vout.

In some implementations, Table 400 may include more granular rows of battery voltage resolution and range (e.g. a 2 cell LiON battery is typically 4.5V to 8.4V), that could be every 1mV instead of every 0.5V as shown in Table 400. Table 400 may include independent settings of PWM duty cycle % and PWM frequency yielding countless configurations for the adaptive charge controller. System 200 may be configured, based on monitoring charging conditions, to provide a warning to a user of abnormal charging.

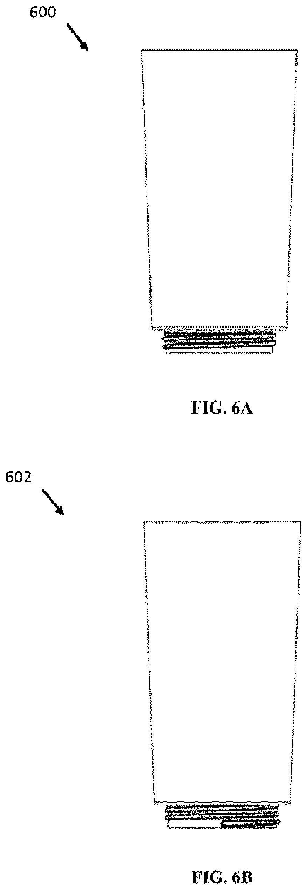

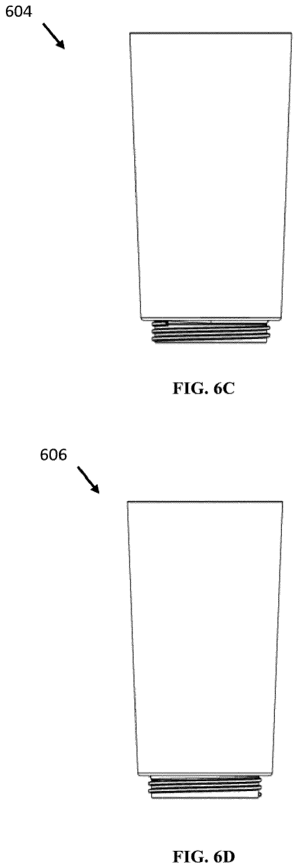

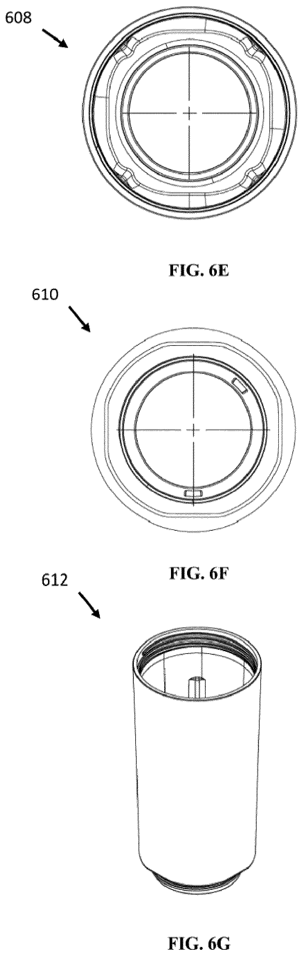

FIGs. 6A through 6G show various views of a container used with of the cordless appliance of FIGs. 1A and 1B. FIG. 6A shows a front view 600 of a container 108 without a lid attached. FIG. 6B shows a back view 602 of container 108. FIG. 6C shows a left side view 604 of container 108. FIG. 6D shows a right side view 606 of container 108. FIG. 6E shows a top view 608 of container 108. FIG. 6F shows a bottom view 610 of container 108. FIG. 6G shows a perspective view 612 of container 108.

While the disclosure particularly shows and describes some implementations, those skilled in the art will understand that various changes in form and details may exist without departing from the spirit and scope of the present application as defined by the appended claims. The scope of this present application intends to cover such variations. As such, the foregoing description of implementations of the present application does not intend to limit the full scope conveyed by the appended claims.

## Claims

1. An adaptive charge controller for a cordless appliance comprising:
an input interface arranged to receive an input electrical power signal;
an output interface arranged to output a boosted electrical power signal to a battery;
a processor arranged to:
monitor an input voltage of the input power signal;
monitor an output voltage and an output current of the boosted electrical power signal; and
adjust a pulse width modulated (PWM) signal based on the input voltage, the output voltage, and the output current; and
an electronic switch arranged to receive the PWM signal from the processor and adjust the boosted electrical power signal in response to the received PWM signal.

2. The adaptive charge controller of claim 1, wherein the electronic switch includes a transistor.

3. The adaptive charge controller of claim 2, wherein the transistor includes a MOSFET.

4. The adaptive charge controller of claim 1, wherein the PWM signal includes a PWM frequency and PWM duty cycle.

5. The adaptive charge controller of claim 1, wherein the battery includes a plurality of battery cells.

6. The adaptive charge controller of claim 1 comprising a memory including a lookup table, wherein the processor is further arranged to adjust the PWM signal based on comparing the monitored input voltage, output voltage, and output current with input voltage, output voltage, and output current settings in the lookup table.

7. The adaptive charge controller of claim 1, wherein the processor is further arranged to control other operations of the cordless appliance including operations of a motor.

8. The adaptive charge controller of claim 1, wherein the input interface receives the input electrical power signal from an electrical charger.

9. The adaptive charge controller of claim 8, wherein the electrical charger is a standards-based charger.

10. The adaptive charge controller of of claim 9, wherein the electrical charger includes at least one selected from the group of a USB 2.0, USB 3.0, USB 3.1, USB BC 1.2, USB Type C 1.2, and USB PD 3.0 charger.

11. A method for adaptively charging a battery of a cordless appliance comprising:
connecting an electrical charger to an input interface of a charge controller;
receiving an input electrical power signal from the electrical charger;
monitoring an input voltage of the input electrical power signal;
monitoring an output voltage and an output current of a boosted electrical power signal output from the charge controller;
adjusting , by a processor, a pulse width modulated (PWM) signal based on the input voltage, output voltage, and output current;
receiving the PWM signal at an electronic switch; and
adjusting, by the electronic switch, the boosted electrical power signal in response to the received PWM signal.

12. The method of claim 11, wherein the electronic switch includes a transistor.

13. The method of claim 12, wherein the transistor includes a MOSFET.

14. The method of claim 11, wherein the PWM signal includes a PWM frequency and PWM duty cycle.

15. A cordless appliance comprising:
a housing arranged to house a motor, battery, a user interface, and an adaptive charge controller;
the adaptive charge controller including:
an input interface arranged to receive an input electrical power signal;
an output interface arranged to output a boosted electrical power signal to a battery;
a processor arranged to:
monitor an input voltage of the input power signal;
monitor an output voltage and an output current of the boosted electrical power signal; and
adjust a pulse width modulated (PWM) signal based on the input voltage, the output voltage, and the output current; and
an electronic switch arranged to receive the PWM signal from the processor and adjust the boosted electrical power signal in response to the received PWM signal.
